# EUROPÄISCHE PATENTANMELDUNG

(11) **EP 1 202 481 A2**
(43) Veröffentlichungstag der Anmeldung: **02.05.2002**
(21) Anmeldenummer: 01122435.9
(22) Anmeldetag: 20.09.2001
(51) Int. Cl.: H04H 1/00

(54) **Verfahren und System zum Übertragen von Informationen von einem stationären Computer auf einen in einem Fahrzeug angeordneten Computer**

(30) Priorität: 20.09.2000 DE 10046836; 27.09.2000 DE 10048995
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Cohausz & Florack

(57) **Zusammenfassung**

Die Erfindung betrifft ein Verfahren zum Übertragen von Informationen von einem stationären Computer auf einen in einem Fahrzeug angeordneten Computer, wobei sich das Fahrzeug im Bereich einer Haltestelle befindet, bei das technische Problem, ein Verfahren und ein System anzugeben, mit dem automatisch und zuverlässig Daten auch in größeren Datenmengen auf einen in einem Fahrzeug angeordneten Computer übertragen werden können, durch ein Verfahren gelöst wird, bei dem die zu übertragenen Informationen auf dem stationären Computer aufbereitet werden, bei dem die aufbereiteten Informationen mittels eines von einer Sendeeinrichtung erzeugten kodierten elektromagnetischen Signals in einen vorgegebenen Übertragungsraumbereich der Haltestelle ausgestrahlt werden, bei dem das elektromagnetische Signal mit Hilfe einer am Fahrzeug angeordneten Empfangseinrichtung während des Aufenthaltes in dem Übertragungsraumbereich aufgenommen wird und bei dem die Informationen aus dem elektromagnetischen Signal dekodiert und auf dem im Fahrzeug angeordneten Computer für eine weitere Verarbeitung gespeichert werden. Das elektromagnetische Signal kann in Form eines Lichtsignals oder eines Funksignals ausgebildet sein.

Die Erfindung betrifft auch ein System zur Durchführung des Verfahrens.

## Beschreibung

Die Erfindung betrifft ein Verfahren zum Übertragen von Informationen von einem stationären Computer auf einen in einem Fahrzeug angeordneten Computer, wobei sich das Fahrzeug im Bereich einer Haltestelle befindet.

Aus dem Stand der Technik ist bekannt, daß für einen Informationsaustausch zwischen einem stationären Computer und einem in einem Fahrzeug angeordneten Computer die als Daten gespeicherten Informationen entweder mit Hilfe eines Datenträgers übertragen werden, mittels einer separaten Telefonverbindung oder mittels einer physisch hergestellten Datenleitung erfolgt. Daher sind die aus dem Stand der Technik bekannten Systeme für die Durchführung des Verfahrens nur für besondere Situationen geeignet, wie beispielsweise das Übertragen von Informationen in größeren Zeitabständen. Die bekannten Verfahren sind nicht dazu geeignet, laufend, also bei regelmäßig stattfindenden Aufenthalten an Haltestellen Informationen aktuell zu übertragen.

Der Erfindung liegt daher das technische Problem zugrunde, ein Verfahren und ein System anzugeben, mit dem automatisch und zuverlässig Daten auch in größeren Datenmengen auf einen in einem Fahrzeug angeordneten Computer übertragen werden können.

Das zuvor aufgezeigte technische Problem wird erfindungsgemäß durch ein Verfahren mit den Merkmalen des Anspruches 1 gelöst, bei dem die zu übertragenen Informationen auf dem stationären Computer aufbereitet werden, bei dem die aufbereiteten Informationen mittels eines von einer Sendeeinrichtung erzeugten kodierten elektromagnetischen Signals in einen vorgegebenen Übertragungsraumbereich der Haltestelle ausgestrahlt werden, bei dem das elektromagnetische Signal mit Hilfe einer am Fahrzeug angeordneten Empfangseinrichtung während des Aufenthaltes in dem Übertragungsraumbereich aufgenommen wird und bei dem die Informationen aus dem elektromagnetische Signal dekodiert und auf dem im Fahrzeug angeordneten Computer für eine weitere Verarbeitung gespeichert werden.

Erfindungsgemäß wird somit eine kontaktlose Übertragungsform für Informationen zwischen einem stationären und einem mobilen, in einem Fahrzeug angeordneten Computer erreicht, wobei insbesondere kein separater Datenträgeraustausch erfolgen oder eine eigenständige Datenleitung installiert werden muß.

Da zudem ein elektromagnetisches Signal verwendet wird, wird neben einem automatisch stattfindenden Datenaustausch dieser auch mit hohen Übertragungsraten durchgeführt, so daß auch kürzere Aufenthaltsdauern an der Haltestelle ausreichen, um eine genügend große Informationsmenge auf den mobilen Computer zu übertragen.

Weiterhin ist erfindungsgemäß erkannt worden, daß es ausreicht, wenn das Fahrzeug sich mit seiner Empfangseinrichtung nur innerhalb eines durch die elektromagnetische Signalstrecke definierten Übertragungsraumbereich aufhält, so daß kein exaktes Justieren der Empfangseinrichtung auf die Sendeeinrichtung erforderlich ist. Insbesondere bei Schienenfahrzeugen ergibt sich durch die festgelegte Fahrspur, daß der Übertragungsraumbereich räumlich stark eingegrenzt werden kann, da sich die Sendeeinrichtung auf einer definierten Trajektorie innerhalb der Haltestelle bewegt. Da als Übertragungsmedium eine elektromagnetische Welle gewählt wird, kommt es dann auf eine genaue Positionierung innerhalb des Übertragungsraumbereiches nicht an.

In bevorzugter Weise wird das elektromagnetische Signal kontinuierlich ausgestrahlt, wobei sich die kodierten Informationen zeitlich wiederholen. Fährt nun das Fahrzeug mit der Empfangseinrichtung in den Übertragungsraumbereich hinein, so empfängt die Empfangseinrichtung das kontinuierliche Signal und dekodiert die ursprünglichen Informationen daraus. Dazu ist lediglich erforderlich durch in der Kodierung des elektromagnetischen Signals eingefügte Synchronisationssignale den Beginn und das Ende einzelner Informations- bzw. Datenabschnitte zu definieren und zu erkennen.

Weiterhin ist es bevorzugt, daß der Empfang und die Kodierung des elektromagnetischen Signals erst dann gestartet wird, wenn das Fahrzeug mit der Empfangseinrichtung innerhalb des Übertragungsraumbereiches eine vorgegebene Fahrgeschwindigkeit unterschritten hat. Dadurch werden Störungen, die durch einen zu hohe Fahrgeschwindigkeit hervorgerufen werden, wirkungsvoll vermieden. Der Empfang und die Kodierung des elektromagnetischen Signals dauert dann so lange an, wie das Fahrzeug mit der Empfangseinrichtung innerhalb des Übertragungsraumbereiches fährt und die vorgegebene Fahrgeschwindigkeit nicht überschreitet, nachdem das Fahrzeug nach einem Aufenthalt wieder angefahren ist.

Bei einer anderen Ausgestaltung der vorliegenden Erfindung wird das elektromagnetische Signal erst dann gestartet, wenn das Fahrzeug mit der Empfangseinrichtung in den Übertragungsraumbereich eingefahren ist. Dadurch wird in vorteilhafter Weise erreicht, daß die Sendeeinrichtung nicht kontinuierlich läuft und somit einer dauerhaften Nutzung unterliegt, obwohl der Anteil der Zeitdauern der Aufenthalte der Fahrzeuge an der Haltestelle nur einen verhältnismäßig geringen Anteil darstellt. Nachdem das Fahrzeug den Übertragungsraumbereich wieder verlassen hat, wird dann unabhängig davon, ob die Informationen vollständig übertragen worden sind, das Ausstrahlen des elektromagnetischen Signals automatisch abgeschaltet. Dazu sind in bevorzugter Weise entsprechende Schaltmittel in Form von Lichtschranken, Kontaktschaltern oder Videobildauswertungen vorgesehen.

Darüber hinaus ist es möglich, das Ausstrahlen des elektromagnetischen Signals erst dann zu starten, wenn das Fahrzeug innerhalb des Übertragungsraumbereiches eine vorgegebene Fahrgeschwindigkeit unterschritten hat. Damit wird, wie bereits erwähnt, das Auftreten von Störsignalen weitgehend unterbunden, die durch ein zu schnelles Fahren innerhalb des Übertragungsraumbereiches auftreten können. Darüber hinaus wird wirkungsvoll vermieden, daß eine Übertragung von Informationen durch Ausstrahlen des elektromagnetischen Signals gestartet wird, obwohl das Fahrzeug an der Haltestelle nicht hält, sondern mit größerer Geschwindigkeit durchfährt. Dazu ist eine Geschwindigkeitsmeßvorrichtung vorgesehen, die ein Geschwindigkeitsmeßsignal erzeugt.

Das von der Sendeeinrichtung ausgestrahlte elektromagnetische Signal kann einerseits breit gefächert sein, um einen möglichst großen Übertragungsraumbereich zu realisieren. Dieses erscheint insbesondere bei nicht schienengebundenen Fahrzeugen sinnvoll zu sein, da diese nicht auf definierten Fahrspuren fahren und somit die Empfangseinrichtungen nicht an vorgegebenen Positionen mit dem Fahrzeug anhalten.

Bei einer Anwendung bei Schienenfahrzeugen ist es dagegen bevorzugt, daß das elektromagnetische Signal gebündelt und entlang einer im wesentlichen gerade verlaufenden Teilstrecke des Fahrzeuges verlaufend ausgestrahlt wird. Somit braucht lediglich ein Übertragungsraumbereich durch die mindestens eine Sendeeinrichtung ausgeleuchtet werden, der eng begrenzt und durch die Bewegungstrajektorie der Empfangseinrichtung des Fahrzeuges vorgegeben ist.

In bevorzugter Weise wird das elektromagnetische Signal als Lichtsignal, beispielsweise als sichtbares, infrarotes oder auch als ultraviolettes Lichtsignal ausgesendet. Vorzugsweise werden in diesem Fall Laserdioden als Sendeeinrichtungen eingesetzt.

Ebenso ist eine Ausgestaltung des elektromagnetischen Signals im Funkwellenbereich möglich. Das von der Sendeeinrichtung erzeugte Funksignal kann dabei in verschiedener Weise kodiert werden, um die Informationen vom stationären Computer auf den mobilen, im Fahrzeug angeordneten Computer zu übertragen.

In einer ersten Ausgestaltung wird das Funksignal mit dem Übertragungsprotokoll eines lokalen Netzwerkes (LAN - local area network) ausgestrahlt. Dieses auch als Funk-LAN bezeichnete Funknetz benötigt einen sogenannten wireless access point, der an das normal Kabelnetz angeschlossen wird, an das der stationäre Computer angeschlossen ist. Jedes Fahrzeug weist dann mindestens einen wireless client adapter auf, der mit dem Funk-LAN eine Verbindung aufnehmen kann. Die Reichweite bei herkömmlichen Funk-LANs beträgt in Gebäuden zwischen 50 und 150m, dagegen im Freien bis zu 600 m. Diese Entfernungen sind ausreichend, um die Haltestellen des Fahrzeuges vollständig abdecken zu können. Die damit erreichbare Datenübertragungsrate beträgt 1 bis 2 Mbit/s.

Eine weitere Ausgestaltung besteht darin, daß das Funksignal mit dem Übertragungsprotokoll DECT (digital enhanced cordless telecommunication) ausgestrahlt wird. Dieser Funkstandard findet insbesondere bei schnurlosen Telefonapparaten Anwendung, dient also der Sprach- und Datenkommunikation. Das Zugriffsverfahren, das bei DECT Anwendung findet, ist TDMA (time division multiple access) und erlaubt viele gleichzeitige Nutzer innerhalb einer Zelle. Daher ist eine Codierung des Funksignals mittels DECT insbesondere bei größeren Bahnhöfen geeignet, um die Informationen mittels Funksignalen auf die einzelnen Fahrzeuge zu übertragen.

Eine weitere Ausgestaltung der Kodierung des Funksignals besteht darin, dieses mit dem Übertragungsprotokoll MODACOM (mobile data communication) auszustrahlen. Das Übertragungsprotokoll MODACOM entspricht einer paketorientierten Übertragung von Daten, so daß MODACOM ausschließlich auf die Übertragung von Daten ausgelegt und optimiert ist. Die Daten werden also in Paketen versendet, so daß größere Datenmengen auf einzelne Pakete verteilt ausgestrahlt und auf der Empfangsseite wieder zusammengefügt werden müssen. Somit kann in Anlehnung an den Übertragungsdienst mittels fester Verbindungen X.25 auch als X.25 über Funk bezeichnet werden. Da der MODACOM-Standard mehrfach protokollgesichert ist, kommt es bei der Übertragung von Daten zu keinen Fehlern oder Datenverlusten, auch wenn eine gestörte Übertragung des Funksignals erfolgt. Daher ist insbesondere im Bereich von elektrifizierten Bahnhöfen, in denen oftmals elektromagnetische Störsignale auftreten, eine Anwendung des MODACOM-Standards vorteilhaft.

Das zuvor beschriebene erfindungsgemäße Verfahren wird im Bereich von Haltestellen des Fahrzeuges angewendet. Als Haltestelle sind dabei ein oberirdischer Zug-Bahnhof, ein U-Bahnhof jeweils im Bereich des Bahnsteiges als auch ein Wendehammer für ein Umkehren der Fahrtrichtung eines Zuges geeignet. Denn an diesen Haltestellen ist das Fahrzeug jeweils eine vorgegebene Zeitdauer in Ruhe, typischer Weise betragen die Aufenthaltsdauern zwischen 30 Sekunden und ca. 5 Minuten. Da mit dem elektromagnetischen Signal eine hohe Übertragungsrate möglich ist, reicht die Aufenthaltsdauer des Fahrzeuges jeweils aus, um eine geeignete, gegebenenfalls vollständige Übertragung der Informationen vom stationären Computer auf den im Fahrzeug angeordneten Computer durchzuführen.

Das zuvor beschriebene Verfahren wird insbesondere für ein Übertragen von Informationen für eine Aktualisierung eines Fahrgastinformationssystems oder für Betriebsfunktionen des Fahrzeuges verwendet. Fahrgastinformationssystem benötigen neben den im Fahrzeug auf dem Computer gespeicherten Stamminformationen für die Darstellung eines Programmes aktualisierte Zusatzinformationen, um im Rahmen des den Fahrgästen angezeigten Programmes auch tages- oder stundenaktuelle Informationen anzuzeigen. Das erfindungsgemäße Verfahren kann dann sowohl zum Übertragen von Stamminformationen, beispielsweise in Betriebshöfen mit länger andauernden Aufenthaltsdauern, oder für ein Übertragen der Zusatzinformationen während des Betriebes und Aufenthaltes an einer Haltestelle eingesetzt werden. Als Informationen für Betriebsfunktionen des Fahrzeugs können beispielsweise Streckeninformationen, Informationen über Anschlußverbindungen oder Reservierungsinformationen mittels des Verfahrens auf das Fahrzeug übertragen werden.

Das oben aufgezeigte technische Problem wird erfindungsgemäß auch durch ein System zum Übertragen von Informationen von einem stationären Computer auf einem in einem Fahrzeug angeordneten Computer gelöst, wobei sich das Fahrzeug im Bereich einer Haltestelle befindet. Erfindungsgemäß weist das System gemäß Anspruch 12 mindestens eine stationäre Sendeeinrichtung zum Erzeugen eines einen vorgegebenen Übertragungsraumbereich ausleuchtenden elektromagnetischen Signals, wobei die Sendeeinrichtung mit dem stationären Computer über eine Datenleitung verbunden ist, eine Kodiereinrichtung für ein Kodieren der Informationen auf das elektromagnetische Signal, eine am Fahrzeug angeordnete Empfangseinrichtung für ein Aufnehmen des kodierten elektromagnetischen Signals, wobei die Empfangseinrichtung mit dem im Fahrzeug angeordneten Computer verbunden ist, und eine Dekodierungseinrichtung für ein Dekodieren der Informationen aus dem elektromagnetischen Signal auf. Dieses System ist insbesondere für die Durchführung des oben beschriebenen Verfahrens geeignet und wird im folgenden anhand eines Ausführungsbeispieles näher erläutert, wobei auf die beigefügte Zeichnung bezug genommen wird.

In der Zeichnung zeigt die einzige Figur ein Ausführungsbeispiel eines erfindungsgemäßen Systems in einer schematischen Darstellung.

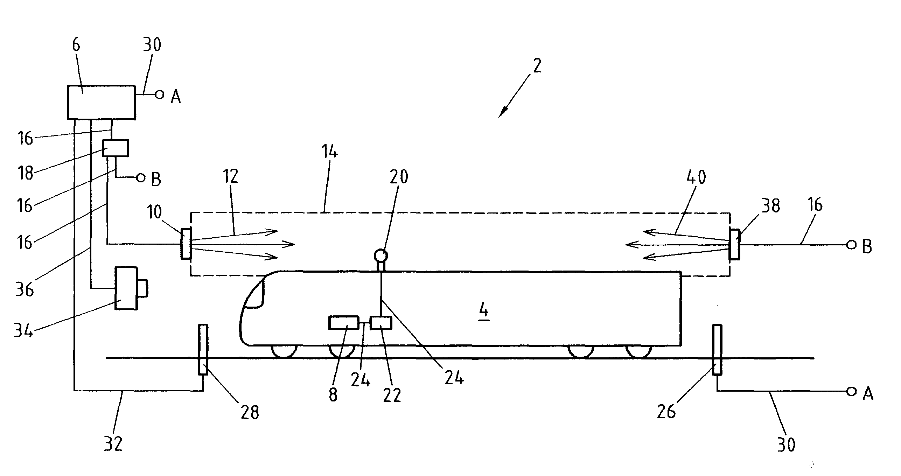

Die Darstellung des Systems in Figur 1 zeigt insgesamt eine Haltestelle 2, in der ein angehaltenes Fahrzeug 4 dargestellt ist. Stationär in der Haltestelle 2 ist ein Computer 6 angeordnet, auf dem die zu übertragenden Informationen gespeichert sind. Im Fahrzeug 4 ist ein Computer 8 angeordnet, auf den die im Computer 6 gespeicherten Informationen übertragen werden sollen.

Das System weist weiterhin eine stationäre Sendeeinrichtung 10 zum Erzeugen eines elektromagnetischen Signals 12 auf, das den in der Figur gestrichelt dargestellten Übertragungsraumbereich 14 ausleuchtet. Die Sendeeinrichtung 10 ist über eine Datenleitung 16 mit dem Computer 6 verbunden. In die Datenleitung 16 ist eine Kodiereinrichtung 18 integriert, die die vom Computer 6 zu übertragenden Informationen kodiert, so daß die so kodierten Informationen auf das elektromagnetische Signal 12 mittels der Sendeeinrichtung aufmoduliert werden können.

Das System weist weiterhin eine am Fahrzeug 4, vorliegend auf dem Dach angeordnete Empfangseinrichtung 20 auf, die das kodierte elektromagnetische Signal 12 aufnimmt. Die Empfangseinrichtung 20 ist über eine Dekodiereinrichtung 22 mit dem im Fahrzeug 4 angeordneten Computer 8 verbunden. Die Dekodiereinrichtung 22 dient dabei einem Dekodieren der auf dem elektromagnetischen Signal 12 aufmodulierten Informationen. Für eine Übertragung der Signale zwischen der Empfangseinrichtung 20, der Dekodiereinrichtung 22 und dem Computer 8 sind Datenleitungen 24 vorgesehen.

Befindet sich nun das Fahrzeug 4 in der Haltestelle 2 in einem vorgegebenen Raumbereich, so ist die Empfangseinrichtung 20 in dem vorgegebenen Übertragungsraumbereich 14 angeordnet und kann die von der Sendeeinrichtung 10 ausgestrahlten elektromagnetischen Signale 12 empfangen und einer Weiterverarbeitung auf den Computer 8 übertragen.

Weiterhin zeigt Figur 1, daß eine Schaltvorrichtung in Form von zwei Lichtschranken 26 und 28 vorgesehen ist, mit denen das Einfahren und Ausfahren des Fahrzeuges mit der Empfangseinrichtung 20 in den Übertragungsraumbereich 14 hinein und hinaus erfaßt werden kann. Alternativ zu Lichtschranken können auch Kontaktschalter oder eine Videobildauswertung oder jegliche weitere geeignete Einrichtung vorgesehen sein. Über Datenleitungen 30 und 32 sind die Schaltvorrichtungen 26 und 28 mit dem stationären Computer 6 verbunden, so daß gemäß einer bevorzugten Ausgestaltung des erfindungsgemäßen Verfahrens das Ausstrahlen des elektromagnetischen Signals 12 durch die Sendeeinrichtung 10 durch Schaltmittel 26 und 28 ein- und ausgeschaltet werden kann.

Darüber hinaus ist eine Geschwindigkeitsmeßvorrichtung 34 vorgesehen, die mit einer Leitung 36 mit dem Computer 6 verbunden ist. Mit der Geschwindigkeitsmeßvorrichtung 34 wird die Geschwindigkeit des Fahrzeuges 4 gemessen, so daß der Computer 6 das Ein- und Ausschalten der Sendeeinrichtung 10 in Abhängigkeit von der Geschwindigkeit des Fahrzeuges 4 bewirken kann. Dadurch wird sichergestellt, daß ein Übertragen von Informationen nur bei geringer Geschwindigkeit des Fahrzeuges und somit weitgehend störungsfrei möglich ist. Als Geschwindigkeitsmeßvorrichtung kann insbesondere eine Radarvorrichtung eingesetzt werden, wie sie herkömmlich bei Verkehrskontrollen eingesetzt wird.

Weiterhin zeigt die einzige Figur, daß die Sendeeinrichtung 10 das elektromagnetische Signal 12 gebündelt und entlang einer im wesentlichen gerade verlaufenden Teilstrecke verlaufend ausstrahlt, die das Fahrzeug 4 durchfährt bzw. auf der dieses während des Aufenthaltes in der Haltestelle 2 steht. Die Bündelung des elektromagnetischen Signals 12 hat dabei den Vorteil, daß die ausgestrahlte Strahlungsintensität in einem eng begrenzten Übertragungsraumbereich konzentriert wird, so daß ausreichende Signal-zu-Rauschen-Verhältnisse erreicht werden, um eine maximale Datenübertragungsrate einsetzten zu können.

Um darüber hinaus den Übertragungsbereich 14 abschnittsweise und teilweise auch überlappend auszuleuchten, ist eine weitere Sendeeinrichtung 38 vorgesehen, die in der Figur den Übertragungsraumbereich 14 von rechts ausleuchtet. Somit kann beispielsweise unabhängig von der Fahrtrichtung des Fahrzeuges 4 die gegebenenfalls in Fahrtrichtung nach vorne ausgerichtete Empfangseinrichtung 20 des Fahrzeuges 4 ausreichend mit einem elektromagnetischen Signal 12 bzw. 40 beaufschlagt werden. Ist dagegen die Empfangseinrichtung 20 ohne Richtcharakteristik, also sowohl nach vorne als auch nach hinten empfangsbereit, so wird eine insgesamt größere Strahlungsintensität auf die Empfangseinrichtung 20 übertragbar. Dabei ist dann eine Synchronisation der elektromagnetischen Signale 12 und 40 erforderlich.

Die dargestellten Sendeeinrichtungen 10 sowie 38 senden entweder ein sichtbares, infrarotes oder ultraviolettes Lichtsignal aus, je nach dem welche Art von Leuchtdiode oder Laserdiode als Sendeeinrichtung 10 bzw. 38 gewählt wird. Zusätzlich können in der Figur nicht dargestellte optische Mittel zum Bündeln des Lichtsignals vorgesehen sein, so daß auch größere Teilstrecken des Fahrzeuges 4 mit einem gebündelten Lichtsignal beaufschlagt werden können. Als Empfangseinrichtung 20 ist mindestens eine Empfangsdiode vorgesehen, wobei ein Empfangsdiodenarrey Vorteile beim Erfassen des Lichtsignals bietet, da eine größere Fläche zur Aufnahme des Lichtsignals 12 bzw. 40 ausgenutzt wird.

Bei einer bevorzugten Ausgestaltung des erfindungsgemäßen Systems ist die Empfangseinrichtung 20 als standardisierte Lichtschnittstelle, insbesondere Infrarotschnittstelle ausgebildet, so daß auf bestehende Übertragungsprotokolle zurückgegriffen werden können, wie sie beispielsweise für die Kommunikation zwischen Kommunikationsgeräten und/oder informationsverarbeitenden Geräten bekannt ist.

## Patentansprüche

1. Verfahren zum Übertragen von Informationen von einem stationären Computer auf einen in einem Fahrzeug angeordneten Computer, wobei sich das Fahrzeug im Bereich einer Haltestelle befindet,
- bei dem die zu übertragenen Informationen auf dem stationären Computer aufbereitet werden,
- bei dem die aufbereiteten Informationen mittels eines von einer Sendeeinrichtung erzeugten kodierten elektromagnetischen Signals in einen vorgegebenen Übertragungsraumbereich der Haltestelle ausgestrahlt werden,
- bei dem das elektromagnetische Signal mit Hilfe einer am Fahrzeug angeordneten Empfangseinrichtung während des Aufenthaltes in dem Übertragungsraumbereich aufgenommen wird und
- bei dem die Informationen aus dem elektromagnetischen Signal dekodiert und auf dem im Fahrzeug angeordneten Computer für eine weitere Verarbeitung gespeichert werden.

2. Verfahren nach Anspruch 1, bei dem das elektromagnetische Signal kontinuierlich ausgestrahlt wird, wobei sich die kodierten Informationen zeitlich wiederholen.

3. Verfahren nach Anspruch 1 oder 2, bei dem der Empfang und die Dekodierung des elektromagnetischen Signals gestartet wird, nachdem das Fahrzeug mit der Empfangseinrichtung in den Übertragungsraumbereich eingefahren ist.

4. Verfahren nach Anspruch 3, bei dem der Empfang und die Dekodierung des elektromagnetischen Signals gestartet wird, wenn das Fahrzeug mit der Empfangseinrichtung innerhalb des Übertragungsraumbereiches eine vorgegebene Fahrgeschwindigkeit unterschritten hat.

5. Verfahren nach einem der Ansprüche 1 bis 4, bei dem das Ausstrahlen des elektromagnetischen Signals gestartet wird, nachdem das Fahrzeug mit der Empfangseinrichtung in den Übertragungsraumbereich eingefahren ist.

6. Verfahren nach Anspruch 5, bei dem das Ausstrahlen des elektromagnetischen Signals gestartet wird, wenn das Fahrzeug innerhalb des Übertragungsraumbereiches eine vorgegebene Fahrgeschwindigkeit unterschritten hat.

7. Verfahren nach einem der Ansprüche 1 bis 6, bei dem definierte Synchronisationssignale mit dem kodierten elektromagnetische Signal ausgestrahlt werden.

8. Verfahren nach einem der Ansprüche 1 bis 7, bei dem das elektromagnetische Signal gebündelt und entlang einer im wesentlichen gerade verlaufenden Teilstrekke des Fahrzeuges verlaufend ausgestrahlt wird.

9. Verfahren nach einem der Ansprüche 1 bis 8, bei dem für das elektromagnetische Signal sichtbares oder infrarotes Licht verwendet wird.

10. Verfahren nach einem der Ansprüche 1 bis 8, bei dem für das elektromagnetische Signal ein Funksignal verwendet wird.

11. Verfahren nach Anspruch 10, bei dem das Funksignal mit dem Übertragungsprotokoll eines lokalen Netzwerkes (LAN - local area network) ausgestrahlt wird.

12. Verfahren nach Anspruch 10, bei dem für das Funksignal mit dem Übertragungsprotokoll DECT (digital enhanced cordless telecommunication) ausgestrahlt wird.

13. Verfahren nach Anspruch 10, bei dem für das Funksignal mit dem Übertragungsprotokoll MODACOM (mobile data communication) ausgestrahlt wird.

14. Verfahren nach einem der Ansprüche 1 bis 13, bei dem die übertragenen Informationen für eine Aktualisierung eines Fahrgastinformationssystems verwendet werden.

15. Verfahren nach einem der Ansprüche 1 bis 11, bei dem die übertragenen Informationen für Betriebsfunktionen des Fahrzeuges verwendet werden.

16. System zum Übertragen von Informationen von einem stationären Computer (6) auf einen in einem Fahrzeug (4) angeordneten Computer (8), wobei sich das Fahrzeug (4) im Bereich einer Haltestelle (2) befindet,
- mit mindestens einer stationären mit dem Computer (6) verbundenen Sendeeinrichtung (10,38) zum Erzeugen eines einen vorgegebenen Übertragungsraumbereich (14) ausstrahlenden elektromagnetischen Signals (12,40),
- mit einer Kodiereinrichtung (18) für ein Kodieren der Informationen auf das elektromagnetische Signal (12,40),
- mit einer am Fahrzeug (4) angeordneten Empfangseinrichtung (20) für ein Aufnehmen des kodierten elektromagnetischen Signals (12,40), wobei die Empfangseinrichtung (20) mit dem im Fahrzeug (4) angeordneten Computer (8) verbunden ist, und
- mit einer Dekodiereinrichtung (22) für ein Dekodieren der Informationen aus dem elektromagnetischen Signal (12,40).

17. System nach Anspruch 16, daß eine Schaltvorrichtung (26) zum Erfassen des Einfahrens des Fahrzeuges (4) mit der Empfangseinrichtung (20) in den Übertragungsraumbereich (14) vorgesehen sind.

18. System nach Anspruch 17, daß die Schaltvorrichtung (26) als Lichtschranke, Kontaktschalter oder Videobildauswertung ausgebildet ist.

19. System nach einem der Ansprüche 16 bis 18, daß eine Geschwindigkeitsmeßvorrichtung (34) zum Messen der Geschwindigkeit des Fahrzeuges vorgesehen ist.

20. System nach einem der Ansprüche 16 bis 19, daß die Schaltvorrichtung (26) und/oder die Geschwindigkeitsmeßvorrichtung (34) mit dem stationären Computer (6) oder der Sendeeinrichtung (10,38) verbunden sind.

21. System nach einem der Ansprüche 16 bis 20, daß die Sendeeinrichtung (10,38) das elektromagnetische Signal (12) gebündelt und entlang einer im wesentlichen gerade verlaufenden Teilstrecke des Fahrzeuges (4) verlaufend ausstrahlt.

22. System nach einem der Ansprüche 16 bis 21, daß eine Mehrzahl von synchronisierten Sendeeinrichtungen (10,38) vorgesehen sind, die abschnittsweise den Übertragungsraumbereich mit ihren elektromagnetischen Signalen (10,40) abdecken.

23. System nach einem der Ansprüche 16 bis 22, daß die Sendeeinrichtung (10,38) ein sichtbares, infrarotes oder ultraviolettes Lichtsignal (12,40) aussendet.

24. System nach Anspruch 23, daß die Sendeeinrichtung (10,38) als Leuchtdiode oder als Laserdiode ausgebildet ist.

25. System nach Anspruch 23 oder 24, daß optische Mittel zum Bündeln des Lichtsignals vorgesehen sind.

26. System nach einem der Ansprüche 23 bis 25, daß die Empfangseinrichtung (20) mindestens eine Empfangsdiode aufweist.

27. System nach Anspruch 26, daß die Empfangseinrichtung (20) als standardisierte Lichtschnittstelle, insbesondere Infrarotschnittstelle ausgebildet ist.

28. System nach einem der Ansprüche 16 bis 22, daß die Sendeeinrichtung (10,38) ein Funksignal aussendet.

29. System nach Anspruch 28, daß die Empfangseinrichtung (20) als standardisierte Funkschnittstelle ausgebildet ist.
